# FASCICULE DE BREVET EUROPEEN

(11) **EP 1 508 984 B1**
(45) Date de publication et mention de la délivrance du brevet: **30.08.2006**
(21) Numéro de dépôt: 04291702.1
(22) Date de dépôt: 05.07.2004
(51) Int. Cl.: H04B 10/155, H04B 10/18, H04L 27/04

(54) **Method de formation d'un signal optique code suivant un format retour a zero ou non retour a zero**
Verfahren zur Bildung von einem kodierten RZ oder NRZ Signal
Method of creating a coded RZ or NRZ optical signal

(30) Priorité: 19.08.2003 FR 0309997
(43) Date de publication de la demande: 23.02.2005
(73) Titulaire: ALCATEL, 75008 Paris (FR)
(72) Inventeur: Bissessur, Hans, 75014 Paris (FR)
(74) Mandataire: Chaffraix, Sylvain

(56) Documents cités:
- FR-A- 2 670 638
- US-A- 5 920 416
- US-A1- 2003 123 771

## Description

La présente invention concerne le domaine des transmissions de données numériques par des moyens optiques. Elle s'applique particulièrement à la transmission à des débits binaires élevées par fibres optiques et plus précisément porte sur une méthode de formation d'un signal optique codé à partir d'une modulation d'intensité d'une onde optique porteuse par des données binaires selon un format (non) retour à zéro.

De manière connue, on cherche à augmenter la capacité des systèmes de transmissions optiques. Dans les systèmes actuels de transmission à fibres optiques de type (D)WDM (Dense Wavelength Division Multiplexing en anglais), on souhaite accroître l'efficacité spectrale, exprimée en bit/s/Hz, c'est-à-dire le rapport de la fréquence de modulation sur l'espacement fréquentiel entre canaux de transmission voisins tout en évitant un recouvrement spectral intercanal.

Actuellement, un système DWDM utilise une modulation à un débit de 10 Gbit/s avec un espacement fréquentiel abaissé à 25 GHz, donnant un efficacité spectrale de 0,4 bit/s/Hz.

Pour devenir compétitifs, les systèmes à 40 Gb/s doivent supporter un espacement fréquentiel intercanaux inférieur à 100 Hz, par exemple égal 50 GHz pour suivre la grille actuelle de normalisation donnée par l'UIT (Union Internationale des Télécommunications).

Une modulation NRZ (non-retour à zéro) ou RZ (retour à zéro) est très fréquemment utilisée et implique de faire varier l'intensité de l'onde porteuse entre deux niveaux. Les variations de niveaux sont déclenchées à des moments imposés par une fréquence d'horloge et cela définit les cellules temporelles successives attribuées aux données binaires à transmettre. Selon l'usage, le niveau faible et le niveau élevé représentent respectivement les valeurs binaires '0' et '1'.

L'impulsion NRZ dure le temps maximal alloué à chaque bit, soit un temps bit T, contrairement à une impulsion RZ.

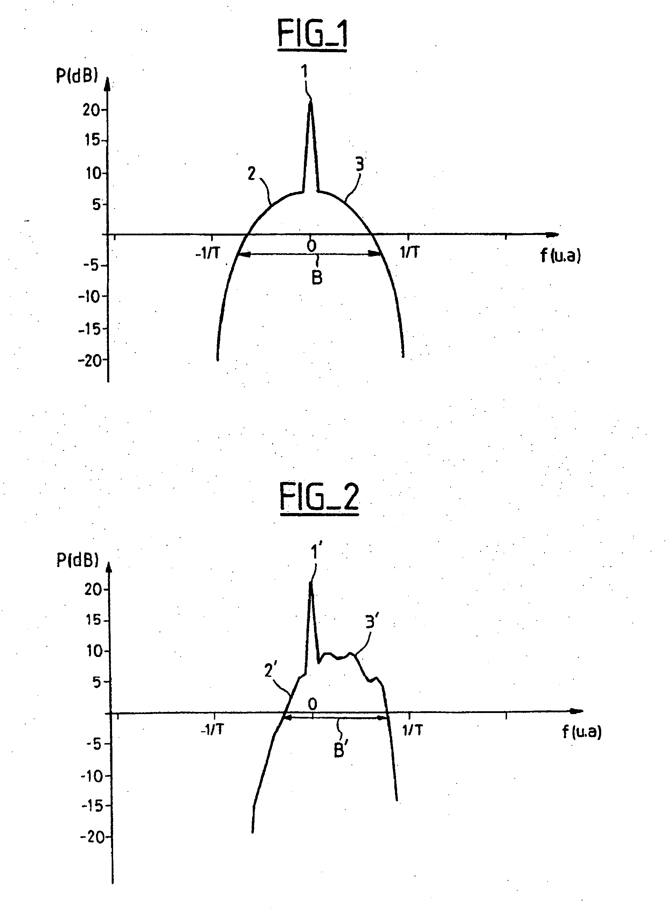

La figure 1 représente le spectre classique d'un signal optique codé NRZ et plus précisément la puissance optique P (en dB) en fonction de la fréquence f (en unités arbitraires).

Ce spectre est caractérisé par une bande principale comportant un pic central maximum 1 associé à l'onde porteuse et deux bandes latérales symétriques 2, 3 de part et d'autre de ce pic 1 relatives au codage.

Cette bande principale présente une largeur spectrale B à -10 dB environ égale à 59 GHz environ à 40 Gb/s. Aussi, un espacement à 50 GHz dans un système à 40 GHz conduirait à un chevauchement trop important des bandes principales de canaux adjacents. Cette diaphonie augmente le taux d'erreur de transmission de façon rédhibitoire.

Toutefois, les deux bandes latérales 2, 3 contiennent des informations redondantes. Aussi, afin d'augmenter l'efficacité spectrale, il est connu de filtrer l'une d'elles.

Une telle méthode est par exemple décrite à 10 Gb/s dans le document intitulé « Vestigial side-band filtering at 10 Gb/s using 12,5 GHz channel spacing demux", C.X. Yu et al, Electronics Letters, pp237-238, 2002.

Cependant, un filtrage est difficile à mettre en oeuvre parce qu'il implique un ajustement précis et délicat de la position du filtre. Et la longueur d'onde de la porteuse, dépendant de la source laser, va varier au cours du temps et/ou en fonction de la température de sorte qu'un asservissement du filtre au spectre est nécessaire.

En outre, pour une bon fonctionnement, la forme de filtre doit être spécifique et est complexe à obtenir.

Une autre solution connue pour une compression spectrale d'un signal codé est basée sur l'utilisation du format spécifique duobinaire ou PSBT (Phase-Shaped Binary Transmission en anglais) par exemple décrit dans le document intitulé "a 1580 nm band WDM transmission technology employing optical duobinary coding", Journal Lightwave Technology, pp191-199, 1999.

En plus d'une modulation en intensité de type NRZ, ce format se caractérise par une modulation en phase sous forme de créneaux avec des changements de niveaux centrés dans les '0'. La hauteur et le signe des variations sont choisis par exemple en fonction de l'environnement d'un '0' c'est-à-dire suivant que ce dernier est entouré de '0', est à gauche ou à droite d'un groupe de '1', est isolé entre deux '1'. Une variation est généralement de l'ordre de ±π.

Pour réaliser ce codage duobinaire, on emploie un modulateur fonctionnant en« push-pull » et commandé un codeur électrique couplé à un un filtre électrique passe-bas. Il s'agit typiquement d'un modulateur interférométrique de type Mach-Zehnder piloté nécessairement sur ses deux bras avec des tensions de commande opposées.

La génération d'un tel signal codé duobinaire est très compliquée, en particulier la détermination d'un point de fonctionnement fait intervenir un grand nombre de paramètres (tensions de polarisation, tension crête à crête etc) et nécessite un asservissement délicat réalisé autour du point de transmission minimum non nul.

En outre, les performances de transmission sont nettement inférieures à celles d'un signal codé NRZ ou RZ notamment en termes de rapport signal à bruit ou de sensibilité c'est-à-dire de puissance nécessaire au niveau du récepteur pour obtenir un taux d'erreur donné.

L'invention a pour but de fournir un signal optique codé de largeur spectrale réduite, simple à réaliser et de bonne qualité même à haut débit, par exemple à 40 Gb/s.

L'invention trouve particulièrement son application pour la transmission de signaux codés multiplexés en longueur d'onde.

L'invention propose à cet effet une méthode de formation d'au moins un signal optique codé à partir d'une modulation d'intensité d'au moins une onde continue dite porteuse par des données binaires selon un format non retour à zéro ou retour à zéro, le signal codé présentant une bande principale de largeur spectrale donnée,
**caractérisée en ce que**, afin de réduire la largeur spectrale, elle comprend une modulation de phase sous forme de variations de phase impulsionnelles positives et des variations de phase impulsionnelles négatives aptes à être sensiblement synchronisées respectivement avec les montées et les descentes de l'intensité modulée ou vice-versa.

La méthode selon l'invention permet de s'affranchir du filtrage de bande.

La modulation de phase selon l'invention est originale et plus simple à mettre en oeuvre que la modulation pour un format PSBT. Dans la pratique, on peut utiliser un modulateur de phase séparé d'un modulateur d'intensité et disposé en amont ou en aval.

La modulation en phase selon l'invention n'empêche pas une modulation en phase supplémentaire de type 'chirp' telle qu'obtenue dans certains cas de schémas de modulation en intensité, par exemple lorsqu'on ne module qu'une électrode d'un modulateur Mach-Zehnder en LiNb03 « z-cut ».

Dans un mode de réalisation avantageux, les variations de phase impulsionnelles présentent, en valeur absolue, un maximum compris entre 0,5 et 1,8 radians et de préférence sensiblement égal à 0,75 radians.

Cette gamme de variation garantit une qualité optimale de signal en terme de largeur de bande et donc une qualité optimale du signal en réception lorsque plusieurs longueurs d'onde à faible espacement fréquentiel sont multiplexées.

Ainsi, une modulation de phase de faible amplitude suffit pour obtenir la compression spectrale. Ceci permet un gain en consommation d'énergie par une réduction de niveau de la tension de commande à appliquer au modulateur en phase et une diminution du coût des composants.

Les variations de phase impulsionnelles positives et négatives peuvent être de préférence sensiblement symétriques, pour une simplicité de mise en oeuvre.

La largeur à mi-hauteur des variations de phase impulsionnelles peut être supérieure ou égale à la moitié de la période de transmission, soit T/2, afin d'optimiser encore la compression spectrale.

De préférence, la forme des variations de phase impulsionnelles peut être sensiblement triangulaire.

Cette forme est préférée à une forme de type créneau avec un maintien du niveau transitoire de la phase.

De préférence, le décalage temporel entre les variations de phase impulsionnelles et les montées ou les descentes peut être inférieur ou égal à 12% environ en valeur absolue de la période de transmission.

Dans un mode de réalisation préféré, une pluralité de signaux codés étant formés suivant ladite méthode définie précédemment, cette dernière comprend en outre le choix d'un espacement fréquentiel pour les ondes porteuses inférieur au double du débit.

Ceci est rendue possible par la compression spectrale obtenue.

Par ailleurs, la méthode peut comprendre un filtrage après les codages et de préférence par un multiplexeur à réseaux de guides ou par un multiplexage par entrelacement.

Ce filtrage renforce la qualité de la transmission notamment en agissant au niveau des croisements entre bandes spectrales adjacentes.

L'invention propose également un système de codage pour la mise en oeuvre de la méthode définie précédemment comportant pour chaque onde porteuse à moduler, des moyens de modulation de phase et des moyens de modulation d'intensité de préférence intégrés sur un même support.

Dans un mode de réalisation préféré, les moyens de modulation en phase comprennent un modulateur électro-optique à base de niobate de lithium et les moyens de modulation en intensité comprennent un modulateur interférométrique de type Mach-Zehnder de préférence à base de niobate de lithium.

D'autres caractéristiques et avantages de l'invention apparaîtront à la lecture de la description ci-après faite des modes de réalisation de l'invention, indiqués à titre d'exemple et en référence aux dessins d'accompagnement, dans lesquels :
- la figure 1, déjà décrite, montre le spectre classique d'un signal optique codé NRZ uniquement,
- la figure 2 montre le spectre d'un signal optique codé NRZ et modulé en phase conformément à l'invention dans un premier mode de réalisation préféré;
- la figure 3 montre les modulations en intensité et en phase nécessaires pour l'obtention du spectre de la figure 2,
- la figure 4 montre un exemple de générateur du signal codé NRZ et modulé en phase dont les caractéristiques sont présentées dans les figures 2 et 3,
- la figure 5 montre un système de transmission de trois signaux multiplexés codés NRZ et modulés en phase conformément à l'invention dans un deuxième mode de réalisation de l'invention,
- la figure 6 montre les spectres des trois signaux multiplexés transmis par le système de transmission de la figure 5;
- les figures 7 à 9 montrent trois diagrammes de l'oeil, les deux premiers étant associés au système de transmission de la figure 6 et le dernier à un système de transmission en NRZ simple.

La figure 2 montre le spectre d'un signal optique codé NRZ et modulé en phase conformément à l'invention dans un premier mode de réalisation préféré. Plus précisément, le spectre est montré en termes de puissance optique P (en dB) en fonction de la fréquence f (en unité arbitraire).

Ce spectre est caractérisé par une bande principale comprenant un pic maximum 1' associé à l'onde porteuse et de deux bandes latérales asymétriques 2', 3' de part et d'autre de ce pic 1'.

Cette bande principale présente une largeur spectrale B' à -10 dB réduite par rapport à la largeur spectrale classique B, et égale à 43 GHz environ à 40 GHz.

Plus précisément, la bande latérale de gauche 2' est fortement réduite et toute l'énergie est quasiment concentrée sur la bande latérale de droite 3'.

L'espacement fréquentiel intercanaux à 50 GHz devient possible dans un système de transmission à 40 GHz tout en gardant la qualité de signal NRZ ou RZ.

La compression de la bande résulte d'une modulation spécifique en phase surimposée à la modulation classique en intensité par exemple NRZ.

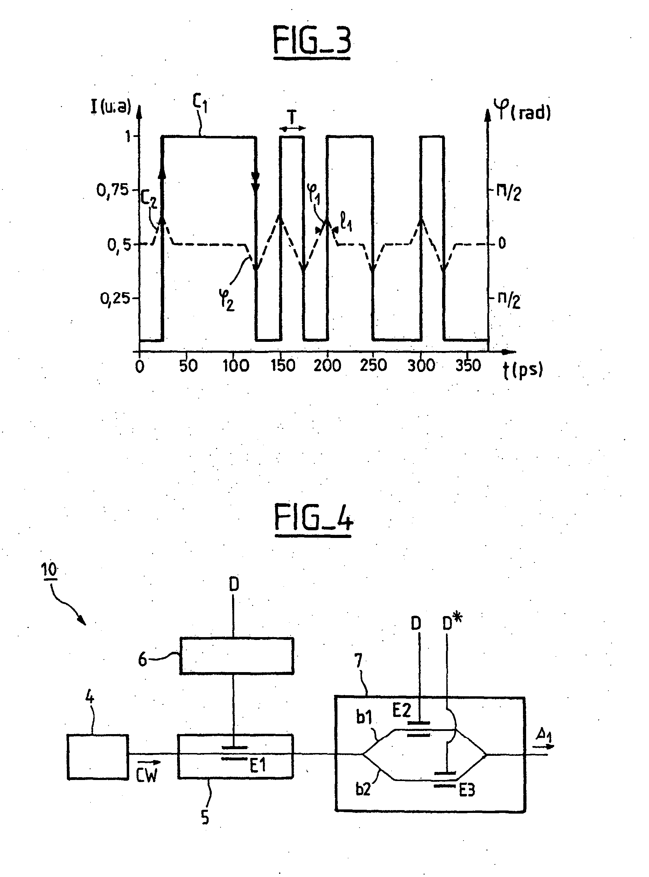

La figure 3 montre les courbes C₁ et C₂ représentant respectivement ces modulations d'intensité I (exprimée en unités arbitraires) et de phase ϕ (exprimée en rad) au cours du temps t (exprimé en picosecondes).

La modulation en intensité l es sous forme de créneaux avec des fronts de montée (symbolisé par une pointe de flèche) et de descente (symbolisé par une pointe de flèche double) raides. La modulation en intensité l est définie en fonction de la séquence suivante de données binaires : 011110101100100.

Le temps bit vaut 25 ps pour le codage choisi à 40 GHz dans cet exemple.

La modulation en phase est sous forme de variations de phase impulsionnelles positives ϕ₁ et négatives ϕ₂ conçues pour être sensiblement synchronisées respectivement avec les fronts montants et les fronts descendants de l'intensité modulée.

Les variations de phase impulsionnelles positives et négatives ϕ₁, ϕ₂ sont choisies sensiblement symétriques pour une simplicité dans la commande.

Pour une réduction optimale de largeur de bande, les impulsions ϕ₁, ϕ₂ sont calées sur les fronts. Toutefois un décalage temporel entre les variations de phase impulsionnelles et les montées et descentes est inférieur ou égal à 12% environ en valeur absolue du temps bit T soit un décalage de ±3 ps par rapport au front, à 40 Gb/s.

Dans ce même but, les impulsions ϕ₁, ϕ₂ présentent de préférence un maximum à 0,75 radians.

Une impulsion Dirac est insuffisante. Aussi, de préférence, on choisit une largeur à mi-hauteur l₁ des variations de phase impulsionnelles ϕ₁, ϕ₂ par exemple égale à la moitié du temps bit.

La forme des variations de phase impulsionnelles ϕ₁, ϕ₂ est sensiblement triangulaire.

Dans une variante (non représentée), les variations de phase impulsionnelles positives ϕ₁ et les variations de phase impulsionnelles négatives ϕ₂ conçues pour être sensiblement synchronisées respectivement avec les fronts de descente et les fronts de montée. Dans cette configuration, l'énergie est concentrée vers les fréquences inférieures (bande latérale de gauche) au lieu des fréquences supérieures (bande latérale de droite).

La figure 4 présente un exemple de générateur 10 du signal optique codé NRZ et modulé en phase dont les caractéristiques sont présentées dans les figures précédentes 2 et 3.

Ce générateur 10 comporte successivement :
- un laser 4 émettant une onde continue porteuse CW à une longueur d'onde par exemple dans la bande C ou L,
- un modulateur de phase 5 commandé par un précodeur électrique 6 à 40 GHz à partir de la séquence de données D déjà indiquée ci-dessus,
- et un modulateur d'intensité 7.

Si nécessaire, afin de compenser les pertes optiques engendrées par l'ajout du modulateur de phase, on peut augmenter la puissance du laser 4, ou rajouter un amplificateur optique.

Le modulateur en phase 5 est un modulateur électro-optique et présente une structure guide d'onde et à base de niobate de lithium.

L'application d'une tension variable sur l'électrode E1 de ce modulateur 5 va induire des variations d'indice de réfraction à l'origine des variations de phase de l'onde porteuse CW qui traverse le modulateur.

Pour obtenir les variations de phase souhaitées (forme, largeur...) on ajuste la longueur du modulateur 5 et on tient compte de son efficacité.

Naturellement, une donnée '1' entre deux données '1', ou une donnée '0' entre deux '0' ne doit pas créer de variation de phase.

Un modulateur de phase à base de semi-conducteurs est également envisageable.

L'onde porteuse modulée en phase se propage ensuite dans le modulateur d'intensité 7 qui est de préférence un modulateur interférométrique de type Mach-Zehnder en niobate de lithium.

Les moyens de commande sont classiques. Les électrodes E2 ,E3 des bras b1, b2 sont respectivement commandées à partir de la séquence de donnée D et son complémentaire D*.

Un modulateur à électroabsorption (EAM en anglais) est également envisageable.

En sortie du modulateur d'intensité 7 on obtient le signal codé NRZ et modulé en phase s₁.

Dans une première variante, seule l'une des électrodes E2, E3 est commandée avec D ou D* indifféremment : le signal codé s₁ est alors « chirpé ».

Dans une deuxième variante, la modulation de phase est réalisée postérieurement à la modulation d'intensité.

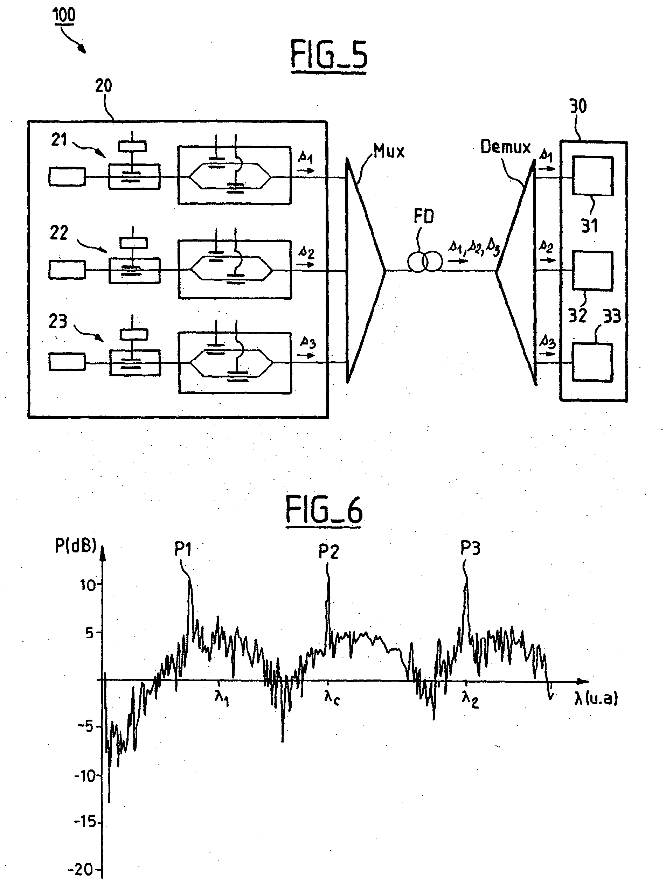

La figure 6 montre un système de transmission 100 transmettant trois signaux multiplexés s₁ à s₃ qui sont codés NRZ et modulés en phase conformément à l'invention. Le système 100 comprend :
- un ensemble 20 de trois générateurs 21, 22, 23 similaires au générateur déjà décrit 10,
- un multiplexeur en longueur d'onde Mux,
- une ligne de transmission par fibre optique FO,
- un démultiplexeur en longueur d'onde Demux par exemple un démultiplexeur à réseaux de guides dit AWG,
- un ensemble 20 de trois récepteurs 31, 32, 33.

Ce système de transmission DWDM 100 à 40 Gb/s utilise un plan d'attribution avec un espacement fréquentiel équidistant à 50 GHz.

Le spectre des trois signaux codés et multiplexés s₁ à s₃ est présenté en figure 3.

Le spectre est montré en termes de puissance optique P (en dB) en fonction de la longueur d'onde λ (en unité arbitraire).

Ce spectre présente trois pics maximum P1 à P3 à des longueurs d'onde porteuses distinctes λ₁, λ_{c}, λ₂ respectivement sensiblement égales à 1545,72 nm, 1546,12 nm, 1546,52 nm.

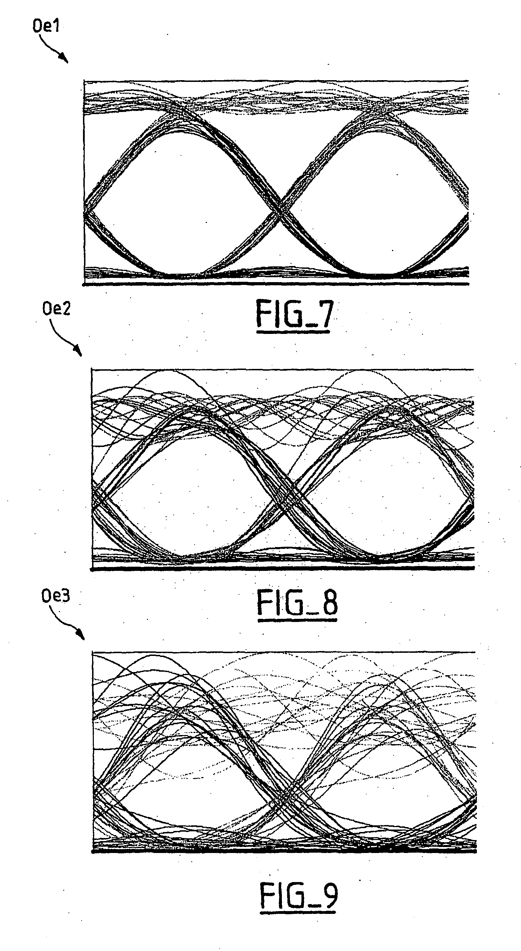

Les figures 7 à 9 montrent trois diagrammes de l'oeil, les deux premiers étant associés au système de transmission de la figure 6 et le dernier à un système de transmission en NRZ simple.

Le premier diagramme de l'oeil Oe1 présenté en figure 7 correspond à celui obtenu pour le signal codé central s₂ lorsque le multiplexeur Mux est un composant filtrant par exemple un multiplexeur à réseaux de guides dit AWG et de préférence de même nature que celui choisi côté démultiplexage.

Un multiplexage avec un entrelaceur ("interleaver" en anglais) est également envisageable.

Le deuxième diagramme de l'oeil Oe2 présenté en figure 8 correspond à celui obtenu pour le signal codé central s₂ lorsque le multiplexeur Mux est un composant passif tel qu'un coupleur.

Le troisième diagramme de l'oeil Oe3 présenté en figure 9 correspond à celui obtenu pour un signal codé central présentant uniquement un codage NRZ et avec un multiplexeur de type composant passif.

Le premier diagramme de l'oeil Oe1 présente une grande ouverture et traduit la qualité du signal reçu en dépit de la modulation de phase.

Le deuxième diagramme de l'oeil Oe2 présente une ouverture acceptable à la différence du troisième diagramme de l'oeil Oe3.

La présente invention n'est pas limitée aux exemples et modes de réalisation décrits et montrés et l'invention peut faire l'objet de nombreuses variantes à la portée de l'homme du métier.

L'invention s'applique aussi bien à un signal codé RZ en prévoyant si nécessaire des moyens pour assurer la synchronisation de la modulation de phase avec la modulation d'intensité en particulier lorsque les impulsions sont particulièrement étroites.

L'invention s'applique aussi bien à un nombre supérieur à 3 de signaux multiplexés.

## Revendications

1. Méthode de formation d'au moins un signal optique codé (s₁ à s₃) à partir d'une modulation d'intensité d'au moins une onde continue dite porteuse (CW) par des données binaires (D, D*) selon un format non retour à zéro ou retour à zéro, le signal codé (s₁) présentant une bande principale de largeur spectrale donnée (B'),
**caractérisée en ce que**, afin de réduire la largeur spectrale, elle comprend une modulation de phase sous forme de variations de phase impulsionnelles positives (ϕ₁) et des variations de phase impulsionnelles négatives (ϕ₂) aptes à être sensiblement synchronisées respectivement avec les montées et les descentes de l'intensité, modulée (I) ou vice-versa.

2. Méthode de formation d'au moins un signal codé (s₁ à s₃) selon la revendication 1 **caractérisée en ce que** les variations de phase impulsionnelles (ϕ₁, ϕ₂) présentent, en valeur absolue, un maximum compris entre 0,5 et 1,8 radians.

3. Méthode de formation d'au moins un signal codé (s₁ à s₃) selon l'une des revendications 1 ou 2 **caractérisée en ce que** les variations de phase impulsionnelles négatives et positives (ϕ_{1,} ϕ₂) sont sensiblement symétriques.

4. Méthode de formation d'au moins un signal codé (s₁ à s₃) selon l'une des revendications 1 à 3 **caractérisée en ce que** la largeur à mi-hauteur (I₁) des variations de phase impulsionnelles (ϕ₁, ϕ₂) est supérieure ou égale à la moitié de la période de transmission (T).

5. Méthode de formation d'au moins un signal codé (s₁ à s₃) selon l'une des revendications 1 à 4 **caractérisée en ce que** la forme des variations de phase impulsionnelles (ϕ₁, ϕ₂) est sensiblement triangulaire.

6. Méthode de formation d'au moins un signal codé (s₁ à s₃) selon l'une des revendications 1 à 5 **caractérisée en ce que** le décalage temporel entre les variations de phase impulsionnelles (ϕ₁, ϕ₂) et les montées ou les descentes est inférieur ou égal à 12% environ en valeur absolue de la période de transmission (T).

7. Méthode de formation d'au moins un signal codé (s₁ à s₃) selon l'une des revendications 1 à 6 **caractérisée en ce que**, lorsqu'une pluralité de signaux codés sont formés suivant ladite méthode, elle comprend le choix d'un espacement fréquentiel pour les ondes porteuses inférieur au double du débit.

8. Méthode de formation d'au moins un signal codé (s₁ à s₃) selon l'une des revendications 1 à 7 **caractérisée en ce que**, lorsqu'une pluralité de signaux codés sont formés suivant ladite méthode, elle comprend un filtrage après les codages par un multiplexeur à réseaux de guides ou par un multiplexage par entrelacement.

9. Système de codage (10, 20, 21 à 23) pour la mise en oeuvre de la méthode définie selon l'une des revendications 1 à 8 comportant pour chaque onde porteuse (CW) à moduler, des moyens de modulation de phase (5) et des moyens de modulation d'intensité (7).

10. Système de codage (10, 20, 21 à 23) selon la revendication 9 **caractérisé en ce que** les moyens de modulation en phase (5) comprennent un modulateur électro-optique à base de niobate de lithium et **en ce que** les moyens de modulation en intensité (7) comprennent un modulateur interférométrique de type Mach-Zehnder.

## Claims

1. A method of forming at least one coded optical signal (s₁ to s₃) by intensity modulating at least one continuous wave referred to as a carrier wave (CW) with binary data (D, D*) conforming to a non return to zero or a return to zero format, the coded signal (s₁) having a main band of given bandwidth (B'), **characterized in that**, to reduce the bandwidth, the method comprises phase modulation in the form of positive impulsive phase variations (ϕ₁) and negative impulsive phase variations (ϕ₂) adapted to be substantially synchronized with the rising edges and falling edges, respectively, of the modulated intensity (I), or vice-versa.

2. A method according to claim 1 for forming at least one coded signal (s₁ to s₃), **characterized in that** the impulsive phase variations (ϕ₁, ϕ₂) have a maximum absolute value from 0.5 to 1.8 radians.

3. A method according to claim 1 or claim 2 for forming at least one coded signal (s₁ to s₃), **characterized in that** the negative and positive impulsive phase variations (ϕ₁, ϕ₂) are substantially symmetrical.

4. A method according to any one of claims 1 to 3 for forming at least one coded signal (s₁ to s₃), **characterized in that** the mid-height width (ℓ₁) of the impulsive phase variations (ϕ₁, ϕ₂) is greater than or equal to half the transmission period (T).

5. A method according to any one of claims 1 to 4 for forming at least one coded signal (s₁ to s₃), **characterized in that** the shape of the impulsive phase variations (ϕ₁, ϕ₂) is substantially triangular.

6. A method according to any one of claims 1 to 5 for forming at least one coded signal (s₁ to s₃),
**characterized in that** the time offset between the impulsive phase variations (ϕ₁, ϕ₂) and the rising or falling edges has an absolute value less than or equal to approximately 12% of the transmission period (T).

7. A method according to any one of claims 1 to 6 for forming at least one coded signal (s₁ to s₃), **characterized in that**, when a plurality of coded signals are formed in accordance with said method, it comprises the selection of a frequency spacing for the carrier waves less than twice the bit rate.

8. A method according to any one of claims 1 to 7 for forming at least one coded signal (s₁ to s₃), **characterized in that**, when a plurality of coded signals are formed in accordance with said method, it comprises filtering after coding by an arrayed waveguide multiplexer or by a multiplexer with an interleaver.

9. A coding system (10, 20, 21 to 23) for implementing the method defined in any one of claims 1 to 8, the system comprising for each carrier wave (CW) to be modulated, phase modulation means (5) and intensity modulation means (7).

10. A coding system (10, 20, 21 to 23) according to claim 9, **characterized in that** the phase modulation means (5) comprise an electro-optical modulator based on lithium niobate and the intensity modulation means (7) comprise a Mach-Zehnder interferometer modulator.

## Patentansprüche

1. Verfahren zur Bildung von mindestens einem kodierten optischen RZ- oder NRZ-Signal (s₁ bis s₃) ausgehend von einer Intensitätsmodulation von mindestens einer kontinuierlichen Welle, genannt Trägerwelle (CW), durch binäre Daten (D, D*), wobei das kodierte Signal (s₁) ein Hauptband mit einer gegebenen Spektralbreite (B') aufweist,
**dadurch gekennzeichnet, dass** es zur Reduzierung der Spektralbreite eine Phasenmodulation in Form von impulsartigen positiven Phasenänderungen (ϕ₁) und impulsartigen negativen Phasenänderungen (ϕ₂) umfasst, die dazu geeignet sind, ungefähr mit den steigenden Flanken bzw. mit den fallenden Flanken der modulierten Intensität (I) oder umgekehrt synchronisiert zu werden.

2. Verfahren zur Bildung von mindestens einem kodierten Signal (s₁ bis s₃) nach Anspruch 1, **dadurch gekennzeichnet, dass** die impulsartigen Phasenänderungen (ϕ₁, ϕ₁) im Absolutwert ein zwischen 0,5 und 1,8 Radiant liegendes Maximum aufweisen.

3. Verfahren zur Bildung von mindestens einem kodierten Signal (s₁ bis s₃) nach einem der Ansprüche 1 oder 2, **dadurch gekennzeichnet, dass** die negativen und positiven impulsartigen Phasenänderungen (ϕ₁, ϕ₂) ungefähr symmetrisch sind.

4. Verfahren zur Bildung von mindestens einem kodierten Signal (s₁ bis s₃) nach einem der Ansprüche 1 bis 3, **dadurch gekennzeichnet, dass** die Breite auf halber Höhe (I₁) der impulsartigen Phasenänderungen (ϕ₁, ϕ₂) größer oder gleich der Hälfte der Übertragungsperiode (T) ist.

5. Verfahren zur Bildung von mindestens einem kodierten Signal (s₁ bis s₃) nach einem der Ansprüche 1 bis 4, **dadurch gekennzeichnet, dass** die Form der impulsartigen Phasenänderungen (ϕ₁, ϕ₂) ungefähr dreieckig ist.

6. Verfahren zur Bildung von mindestens einem kodierten Signal (s₁ bis s₃) nach einem der Ansprüche 1 bis 5, **dadurch gekennzeichnet, dass** die zeitliche Verschiebung zwischen den impulsartigen Phasenänderungen (ϕ₁, ϕ₂) und den steigenden Flanken oder fallenden Flanken im Absolutwert kleiner oder gleich von ungefähr 12% der Übertragungsperiode (T) ist.

7. Verfahren zur Bildung von mindestens einem kodierten Signal (s₁ bis s₃) nach einem der Ansprüche 1 bis 6, **dadurch gekennzeichnet, dass** dann, wenn eine Vielzahl von kodierten Signalen nach dem Verfahren gebildet wird, dieses die Wahl eines Frequenzabstands für die Trägerwellen kleiner dem Doppelten der Übertragungsrate umfasst.

8. Verfahren zur Bildung von mindestens einem kodierten Signal (s₁ bis s₃) nach einem der Ansprüche 1 bis 7, **dadurch gekennzeichnet, dass** dann, wenn eine Vielzahl von kodierten Signalen nach dem Verfahren gebildet wird, dieses eine Filterung nach den Kodierungen durch einen mit Arrayed-Waveguide-Grating arbeitenden Multiplexer oder durch ein Multiplexverfahren durch Verschachtelung umfasst.

9. Kodierungssystem (10, 20, 21 bis 23) zur Umsetzung des nach einem der Ansprüche 1 bis 8 definierten Verfahrens, das für jede zu modulierende Trägerwelle (CW) Phasenmodulationsvorrichtungen (5) und Intensitätsmodulationsvorrichtungen (7) aufweist.

10. Kodierungssystem (10, 20, 21 bis 23) nach Anspruch 9, **dadurch gekennzeichnet, dass** die Phasenmodulationsvorrichtungen (5) einen elektrooptischen Modulator auf Lithiumniobat-Basis umfassen, und **dadurch**, dass die Intensitätsmodulationsvorrichtungen (7) einen interferometrischen Modulator des Mach-Zehnder-Typs umfassen.
